# EUROPEAN PATENT SPECIFICATION

(11) **EP 3 292 654 B1**
(45) Date of publication and mention of the grant of the patent: **14.08.2019**
(21) Application number: 16725048.9
(22) Date of filing: 04.05.2016
(51) Int. Cl.: H04L 9/32

(54) **A SECURITY APPROACH FOR STORING CREDENTIALS FOR OFFLINE USE AND COPY-PROTECTED VAULT CONTENT IN DEVICES**
SICHERHEITSANSATZ ZUM SPEICHERN VON BERECHTIGUNGSNACHWEISEN ZUR OFFLINE-NUTZUNG UND VON KOPIERGESCHÜTZTEN VAULT-INHALTEN IN VORRICHTUNGEN
APPROCHE DE SÉCURITÉ POUR STOCKER DES JUSTIFICATIFS D'IDENTITÉ DESTINÉS À UNE UTILISATION HORS LIGNE ET UN CONTENU DE COFFRE PROTÉGÉ CONTRE LA COPIE DANS DES DISPOSITIFS

(30) Priority: 07.05.2015 EP 15166789
(43) Date of publication of application: 14.03.2018
(73) Proprietor: Thanksys NV, 3500 Hasselt (BE); Sodexo SA, 92130 Issy les Moulineaux (FR)
(72) Inventor: DE MEESTER, Jan, 2600 Antwerpen (BE); DE MULDER, Yoni, 2640 Mortsel (BE)
(74) Representative: Brantsandpatents bvba
(86) International application number: PCT/EP2016/060107
(87) International publication number: WO 2016/177843

(56) References cited:
- US-A1- 2009 132 813
- Kari Kostiainen ET AL: "Towards User-Friendly Credential Transfer on Open Credential Platforms" In: "LECTURE NOTES IN COMPUTER SCIENCE", 1 January 2011 (2011-01-01), Springer Berlin Heidelberg, Berlin, Heidelberg, XP055112076, ISSN: 0302-9743 ISBN: 978-3-54-045234-8 vol. 6715, pages 395-412, DOI: 10.1007/978-3-642-21554-4_23, the whole document
- Kamil Smieszek ET AL: "Electronic safe for passwords storage", Przeglad Teleinformatyczny, 2014, T. 2, Nr. 3-4 (38), 1 January 2014 (2014-01-01), pages 3-15, XP055222718, Retrieved from the Internet: URL:https://www.infona.pl/resource/bwmeta1 .element.baztech-c6a78508-908e-4359-ae7b-9 6d15cb14487 [retrieved on 2015-10-21]

## Description

### TECHNICAL FIELD

The invention relates to the technical field of securing credentials and copy-protected vault content in devices such as smartphones or tablets.

### BACKGROUND

There remains a need in the art for improved security of a cryptographic key in devices, particularly in relation to payment and other transactional services, especially in the case of mobile devices. For the latter, up to this day, the most obvious way is to use the embedded Secure Element (SE), e.g. a SIM or an SD card. However, there are many difficulties to establish this kind of security in the ecosystem of mobile applications (apps), e.g., different operating systems, different mobile operators (service providers) and different hardware vendors. However, this high level of security is not always needed. A simple user name and password or an embedded key is often sufficient, but this has the disadvantage that either the credentials (a) need to be stored offline, which can relatively easily be hacked, or (b) need to be kept in the cloud, which requires always-online access.

Document US2009132813 discloses an apparatus and methods for providing scalable, dynamic, individualized credential services using mobile phones. The document discloses a scheme to perform transactions in a secure environment between a user and another party such as a merchant. The entire scheme is based on the Public Key Infrastructure (PKI). The scheme allows (1) the user to authenticate himself on his device to unlock credentials, (2) to securely communicate the credentials to another party, (3) the other party to grant the user the authorization according to the presented credentials. The concept disclosed in US2009132813 is limited to authentication with credentials, whereas the invention disclosed in this document comprises a plurality of aspects regarding secure storage of sensitive data, as well as the use of this data as monetary value in either a real or virtual currency. Furthermore, the concept disclosed in US 2009132813 relies entirely on the use of a PKI, whereas the invention disclosed in this document is built on a more complex cryptographic solution than merely PKI.

Document "Towards User-Friendly Credential Transfer on Open Credential Platforms" by Kari Kostiainen et al. published in Lecture Notes in Computer Science 6715 (pp. 395-412, 2011, doi:10.1007/978-3-642-21554-4_23) discloses an open credentials platform allowing a service provider to issue credentials to a hardware-based Trusted Execution Environment (TrEE) and transferring those credentials between the TrEEs on different mobile devices belonging the same user using a Trusted Server. The concept disclosed in said document by Kari Kostiainen et al. relies on specific hardware referred to as TrEE and cannot be implemented without said specific hardware, whereas the invention disclosed in this document does not require any special type of hardware. Second, the concept disclosed in said document by Kari Kostiainen et al. is limited to transferring credentials and does not allow to restore credentials. This is opposed to the invention disclosed in this document, which allows to distribute credentials to different devices belonging to the same user and allows to restore credentials even if the user no longer has any devices in his possession. Third, the concept disclosed in said document by Kari Kostiainen et al. is limited to operation requiring an online connection with a Trusted Server, whereas the present invention allows offline operation as well. Finally, the concept disclosed in said document by Kari Kostiainen et al. is limited by a "trust on first use" approach (as referred to in the paper), whereas embodiments of the present invention allow a user to install, remove and re-install the software tool implementing the method disclosed in this document at any moment.

Document "Electronic Safe for Passwords Storage" by Kamil Smieszek et al. published in Przeglad Teleinformatyczny, T. 2, Nr. 3-4(38) (pp. 3-15, 2014) discloses a concept and related software tool (i.e., an application) that allows a user to create his own safe (called the Electronic Safe for Passwords Storage or ESPS short) for storing sensitive data, where the sensitive data is protected by using a hardware-based Trusted Platform Module (TPM) and its supported Root of Trust. The safe and the Root of Trust can be stored on removable storage media such as a removable Flash RAM drive in order to make the ESPS also available on other devices. The application consists of two components: (1) the database storing the encrypted sensitive data, and (2) the TPM and its supported Root of Trust storing of all cryptographic keys and executing all cryptographic operations. The concept disclosed in said document by Kamil Smieszek et al. is limited by its reliance on specific hardware (i.e., TPM), whereas the present invention does not require specific hardware. The reliance on TPM further limits the applicability of the concept disclosed in said document by Kamil Smieszek et al. because TPM is not available as such for mobile devices. On the contrary, the present invention can be used for both desktop and laptop computers as well as mobile devices. Furthermore, the concept disclosed in said document by Kamil Smieszek et al. is limited to the secure storage of sensitive data, and more specifically of authentication data. In contrast to this, the invention disclosed in this document not only provides a solution to securely retrieve sensitive data offline on a device, or to store, distribute and restore sensitive data on a device using a Trusted Server, but also provides a solution to store copy-protected vault content and to exchange this content in a secure way between devices peer-to-peer, i.e., offline. Finally, the concept disclosed in said document by Kamil Smieszek et al. is problematic when it comes to distributing said ESPS to other devices, since each device has its own TPM that supports a different Root of Trust. Opposed to this, the present invention fully supports distribution across different devices.

Document US8959579B2 discloses a method for providing secure containers or data vaults for data of one or more managed applications, which involves intercepting read or write operation from the managed application when the application is executed on a mobile device. In some embodiments, each managed application may be assigned its own private data vault and/or may be assigned a shared data vault that is accessible to at least one other managed application. As the managed application executes, calls for access to the data may be intercepted and redirected to the secure containers. Data stored in a secure container may be encrypted according to a policy. Other aspects relate to deleting data from a secure container, such as via a selective wipe of data associated with a managed application. Further aspects relate to configuring and creating the secure containers, retrieving key information required to encrypt/decrypt the data stored in the secure containers, and publishing the managed applications, policy information and key information for download to a mobile device.

Document WO2013040605 discloses a computer-implemented method for initiating a mobile computing device contactless payment transaction, which involves:
- contactless payment transactions being initiated through single input activation of a mobile device's secure element and contactless communication system;
- activation of the secure element and the contactless communication system being coupled to the activation status of the mobile device's screen;
- activation of the secure element may be further coupled to the activation status of an electronic wallet application. Where activation of the electronic wallet application is required, one-click activation of the electronic wallet application and secure element is provided.

Document WO2005067402 discloses a certification mobile terminal, and an electronic transaction system and method using the same, whereby a certificate is downloaded to a mobile terminal from a certification authority. In a wired electronic transaction, a user's transaction history is provided to the mobile terminal from a service providing server or a user's transaction terminal, and the mobile terminal digitally signs the transaction history by using a stored digital certificate and provides the digitally signed transaction history to the service providing server or the transaction terminal so that the service providing server may finally receive the digitally signed transaction history. The service providing server settles the transaction with the user according to the digitally signed transaction history, and provides a service to the user. Also, in the offline transaction, the certificate stored in the mobile terminal is provided to a system to thereby execute stable transactions based on the certificate.

The abovementioned documents do not seem to disclose an elegant and lightweight application for the combination of secure local storage of an offline password, online transaction security using a symmetric or asymmetric key, or a peer-to-peer transaction security using an asymmetric key pair, without using a Secure Element.

The present invention aims to resolve at least some of the problems mentioned above. The invention thereto aims to provide a solution which is intermediary to storing the credentials (a) offline or (b) in the cloud. The present invention does not provide the high level of security that hardware can offer for high end applications such as payment methods, but at the same time the invention does raise the security level considerably compared to the simpler classic username/password model. The present invention can also be implemented on a hardware secure element, and can therefore be instrumental in a migration process from non-hardware to hardware-based security.

### SUMMARY OF THE INVENTION

In a first aspect, the invention concerns a computer-implemented method for securely storing credentials for offline use and copy-protected vault content, using a server and an application on a device of a user, comprising the steps of:
a) said server storing said credentials, unable to decrypt said credentials by itself;
b) said application storing encrypted credentials on said device, unable to decrypt said credentials without assistance of a relying third-party application and/or said user;
c) being able to distribute said credentials across different devices of said same user, using both said server and interaction of said user;
d) said user providing backup data without credentials to said server, in order to restore said credentials in case of loss of said device;
whereby the method does not require a Secure Element but is secured using cryptographic keys and encrypted storage; whereby said copy-protected vault content is transferred from said first device of said first user to a second device of said first user and/or said copy-protected vault content is transferred from said first device of said first user to a third device of a second user, and said copy-protected vault content is transferred without connecting to said server.

In a further aspect of the present invention, this comprises a Key Unlocking Code (e.g. a PIN, passphrase ...) of said user optionally protecting said credentials and said copy-protected vault content, whereby said server and said application are not storing said Key Unlocking Code of said user.

In a further aspect, said application stores said credentials or said copy-protected vault content of said user on said device in an encrypted form, unable to decrypt said credentials or said copy-protected vault content without assistance of a relying third party application and/or said user.

In a further aspect, said server restores said credentials to a new device of said same user, using backup data without said credentials provided by said user and without interaction with any said other device of said user.

In a further aspect, said server is not able to distribute said copy-protected vault content across different devices of said same user or to restore said copy-protected vault content to a new device of said same user to prevent copying or cloning.

In a further aspect, said copy-protected vault content is transferred from said first device of said first user to a second device of said first user and/or said copy-protected vault content is transferred from said first device of said first user to a third device of a second user without connecting to said server.

In a further aspect, the present invention provides a system suitable for a computer-implemented method for securely storing credentials for offline and/or online use and copy-protected vault content, which comprises a processing unit configured for the execution of the method as described above.

In a further aspect, the present invention provides an application product suitable for a computer-implemented method for securely storing credentials for offline use and copy-protected vault content, which comprises at least one computer-accessible medium, on which computer-accessible program code portions are saved, which comprise instructions for the execution of the computer-implemented method as described above.

### FIGURES

Figure 1 presents a first embodiment of the present invention.
Figure 2 presents a first embodiment of the present invention.
Figure 3 presents a first embodiment of the present invention.
Figure 4 presents a second embodiment of the present invention.
Figure 5 presents a second embodiment of the present invention.
Figure 6 presents a second embodiment of the present invention.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.
The term "credential" refers to data that the user or application can use for authenticating and securing transactions with a given provider. Examples of credentials are PIN, passwords, symmetric keys, asymmetric keys, tokens, certificates, signatures and biometric data. Credentials might be used online and offline.
The term "vault content" refers to data which is valuable to the user for a given service and needs to be protected from copying. Examples of vault content comprise meal vouchers, gift vouchers, tickets, coupons, license keys for a software package, signatures, certificates, cryptographic keys.
The term "device" refers to a small computing device, typically small enough to be handheld (hence it is also commonly known as a "handheld computer" or simply "handheld") having a display screen with touch input and/or a miniature keyboard, e.g. a smartphone or tablet computer. A device has an operating system (OS), and can run various types of application software, known as apps.
The term "device ID (DID)" refers to an identifier of the device. The device ID may comprise a hardware fingerprint and/or other device-specific data.
The term "point of service (POS)" refers to the place where a transaction is completed. It is the point at which a customer interacts with a merchant in exchange for goods or services.
The term "memory box" refers to a dedicated part of the encrypted storage of a computer-accessible medium, e.g. the internal memory of a device.
In this document, the term "memory box application" refers to any software application present at client side that implements the method disclosed in this document. It is therefore not to be interpreted as limiting the invention disclosed in this document to one or more particular embodiments.
The term "Secure Element" refers to a tamper-resistant platform (typically a one chip secure microcontroller) capable of securely hosting applications and their confidential and cryptographic data (e.g. key management) in accordance with the rules and security requirements set forth by a set of well-identified trusted authorities.
The term "server" refers in this document to a server which provides online network service that applications can use to store, distribute and retrieve the credentials.
The term "key" refers to a piece of information (a parameter) that determines the functional output of a cryptographic algorithm or cipher. Without a key, the algorithm would produce no useful result. In encryption, a key specifies the particular transformation of plaintext into ciphertext, or vice versa during decryption. Keys are also used in other cryptographic algorithms, such as digital signature schemes and message authentication codes. To prevent a key from being guessed, keys need to be generated truly randomly and contain sufficient entropy (chaos). The problem of how to safely generate truly random keys is difficult, and has been addressed in many ways by various cryptographic systems.
The term "public-key cryptography", also known as asymmetric cryptography, refers to a class of cryptographic algorithms which requires two separate keys, one of which is *secret* (or *private)* and one of which is *public.* Although different, the two parts of this key pair are mathematically linked. The public key is used to encrypt plaintext or to verify a digital signature; whereas the private key is used to decrypt ciphertext or to create a digital signature. The term "asymmetric" stems from the use of different keys to perform these opposite functions, each the inverse of the other - as contrasted with conventional ("symmetric") cryptography which relies on the same key to perform both.
The term "symmetric-key cryptography" refers to a class of cryptographic algorithms that use the same cryptographic keys for both encryption of plaintext and decryption of cipher text. The keys may be identical or there may be a simple transformation to go between the two keys. The keys, in practice, represent a shared secret (e.g., a password, a passphrase, a big number or an array of randomly chosen bytes) between two or more parties that can be used to maintain a private information link.
The term "digital certificate" refers to an electronic document generated to prove ownership of a public key in the context of public-key cryptography.
The term "client authentication" refers to the secure identification of a client with respect to a system or third party, whereby the identification is not limited to a mere declaration of the identity of the client by the client, but additionally encompasses a means of verifying that the identification is bona fide.
The term "out-of-band authentication" refers to the principle in cryptography to let authentication take place using a connection or channel separate from the primary connection or channel used for authentication. This relates to the broader concept of multi-factor authentication, whereby a client is only considered authenticated with respect to a system after a multitude of complementary pieces of evidence of identity is delivered by the client.
The term "plaintext" in cryptography refers to information that a sender wishes to transmit to a receiver. Cleartext is often used as a synonym. Plaintext has reference to the operation of cryptographic algorithms, usually encryption algorithms, and is the input upon which they operate. Cleartext, by contrast, refers to data that is transmitted or stored unencrypted (i.e., 'in the clear').
The term "OWF" in computer science refers to a one-way function, i.e. a function that is easy to compute on every input, but hard to invert given the image of a random input. Here, "easy" and "hard" are to be understood in the sense of computational complexity theory, specifically the theory of polynomial time problems. Not being one-to-one is not considered sufficient of a function for it to be called one-way.
The term "KUC" refers to a Key Unlocking Code and is provided by the user during the process to derive a key. Examples of a KUC can be a numeric code (PIN), an alphanumeric password or passphrase or a biometric aspect such as a fingerprint.
The term "KDF" in computer science refers to a Key Derivation Function, i.e. a one-way function (OWF) that deliberately consumes a certain amount of time and optionally memory as well used to calculate a stronger cryptographic key out of a weak cryptographic key such as a KUC of a user. A KDF is typically used as a countermeasure against dictionary or brute-force attacks.
The term "MAC" in cryptography refers to a Message Authentication Code that provides data integrity and authenticity based on the use of a symmetric key. A MAC is typically used to prove ownership of a symmetric key, or to provide data integrity and authenticity.
The term "nonce" in cryptography refers to an arbitrary number used only once in a cryptographic communication.
The term "salt" in cryptography refers to random data that is used as an additional input to a one-way function that hashes a password or passphrase. This is related to the terms salted and salting throughout this document.
The term "one-time code (OTC)" refers to a randomly generated code that can be used only once. Such codes can for example be used for user authentication.
The term "obfuscation" in the area of software development refers to the deliberate act of creating obfuscated code, i.e. source or machine code that is difficult for humans to understand. Programmers may deliberately obfuscate code to conceal its purpose (security through obscurity) or its logic, in order to prevent tampering and deter reverse engineering.
The term "user ID (UID)" is used as a unique identifier of the user. In a preferred embodiment, this UID comprises a randomly generated number and/or the email address of the user and/or the phone number of the user.
The term "Storage Server" refers to an online service, where certain content can be retrieved only by the user in a secure way. An email server can be considered as a Storage Server, whereby the said content is included in an email sent to the email address of said user. A server belonging to a third party service can also be considered as a Storage Server, whereby the said content is only available to said user after proper authentication to the said third party service. A protected file server can also be considered as a Storage Server, in which case the said content is included in a stored file.
The term "memory box application" refers to the application running in the device that makes the cryptographic service available to relying third party applications and can retrieve data from the memory box.
The term "third party application" refers to a relying application that makes use of the "memory box application".
The term "protocol ID (PID)" is used as a unique identifier of each protocol. This prevents crafted replay attacks where a message for protocol A is replayed for protocol B.
The term "counter (ctr)" is an increase-only number that is shared and synchronized between the memory box application and server and that is used as a countermeasure against replay attacks.

The computer-implemented method disclosed in this document involves an application on a device of a user as well as a server. Hereby, said device, e.g. a smartphone, tablet, desktop computer or laptop computer, is able to store credentials and copy-protected vault content. Said server assists said application in initializing itself and storing, restoring, distributing, accessing or issuing said credentials.

In an embodiment where the method disclosed in this document is implemented in a software application, referred to as memory box application in the following, the initialization of said application may comprise the following aspects. A first aspect is the downloading of the application to the device of a user. A second aspect is the actual initialization. During this initialization, two symmetric keys K0 and K1 are initialized and stored at the server side. At the application side:
- K0 can be computed by the memory box application on demand (i.e., when needed) without a KUC of said user, but with the user ID, device ID and some randomness that is stored in the memory box application
- K1 can be computed by the memory box application on demand (i.e., when needed) given a KUC that is provided by said user, and the user ID, device ID and some randomness that is stored in the memory box application

This means that the keys K0 and K1 are never stored as such in the device and thus not in memory box application nor in the third party application. Here, the purpose of the symmetric keys K0 and K1 is to securely store credentials or vault content, either requiring a user-provided KUC or not.

In a preferred embodiment of the invention, the user needs to provide a storage identifier (SID, e.g. his email address) that allows the user access to the storage server and an out-of-band identifier (OBID, e.g. his mobile phone number) during the initialization of the memory box application.

In a preferred embodiment of the invention, said SID and said OBID of said user are tied together meaning that said same user needs to use said same SID and said same OBID to initialize a memory box application on a different device.

In a preferred embodiment of the invention, said SID of said user is verified upon initialization in order to ensure that said user is the legitimate owner of said SID. Such verification can for instance be done by sending an activation mail with an activation link to the email address provided by the user, whereby verification is realized only after said activation link is accessed.

In a preferred embodiment of the invention, an Out Of Band (OOB) channel is used for additional (i.e. two-factor) authentication of the user.

In a preferred embodiment of the invention, said Out Of Band channel takes the form of an SMS and the authentication takes the form of sending an authentication code to Out Of Band Identifier (OBID), i.e., the mobile phone number of said user. This also ensures the server that said user is the legitimate owner of said mobile phone number.

In a preferred embodiment of the invention, a Storage Server is used for storage of part of the data that is used for credential restore or distribution afterwards.

In a preferred embodiment of the invention, a third party application can only retrieve the sensitive data from said memory box via the memory box application, which requires to reconstruct K0 or K1 depending on which key was used to protect the stored sensitive data.

In a preferred embodiment of the invention, said key is dynamically generated using user ID, device ID, some randomness and optionally a user KUC code, whereby the user KUC code is never stored in said device nor in the server.

In a preferred embodiment of the invention, said device ID is randomized by the memory box application in order to prevent replay attacks and also to prevent that an attacker can merely "guess" the randomized device ID.

In a preferred embodiment of the invention, more than two symmetric keys can be initialized. Keys K0 and Ki can be initialized, where K0 is as described above, but where each Ki with i=1,2,3,... is associated with a different KUCi of said user. This allows the initialization of the memory box application using more than one user-provided KUC (e.g., a numeric PIN and an alphanumeric passphrase).

In a preferred embodiment of the invention, said memory box application initialized with more than two symmetric keys allows the secure storage of credentials and vault content under the protection of different user-provided KUCs, where each KUC may achieve a lower or higher level of security. The choice of said symmetric key and said associated KUC may depend on the sensitivity of the stored data.

In a preferred embodiment of the invention, the server provides the memory box application with an asymmetric client key pair and the corresponding certificate during the initialization that allows to perform client authentication during any future communication with said server.

In a more preferred embodiment of the invention, the serial number of said client certificate depends on the user ID and device ID.

In a preferred embodiment of the invention, once the memory box application is initialized, it can be used by third party applications to store different credentials and vault content.

In a preferred embodiment of the invention, upon initialization of a memory box application implementing the method disclosed in this document, the server provides the user with a one-time code to de-register said initialized memory box application and with a set of one-time codes that allows the user to authenticate himself when executing protocols via a web portal.

In a preferred embodiment of the invention, a Storage Server is used for storage of said one-time codes.

In the present invention, credential storage is meant to be used by third party applications that need a secure storage for their passwords, symmetric keys, asymmetric key pairs, tokens, biometric data, certificates, etc. The main focus in this case is to make sure that credentials are stored in a safe way when applications do not need them. The memory box application and accompanying server will store only part of the elements needed to reconstruct a credential. The other part is handled by the third party application that wants to access the credential. This part is also supposed to be stored for backup purposes by the user. Neither the server nor the memory box application stores this part, so they cannot decrypt the stored credentials on their own. This means that once a credential is properly stored, the memory box application and the server can only retrieve it with the collaboration of the user, or the third party application for which the credential was stored. Moreover, if the credential is protected under K1, the user has to provide his KUC to restore the credential locally in the memory box application.

In an embodiment of the invention, protocols are foreseen to de-register an initialized memory box application, to change the SID of the user, to change the OBID of the user, to change the KUC of the user, to reset the KUC of the user, and to request a new list of one-time user authentication codes.

In an embodiment of the invention, protocols are foreseen to delete credentials, either globally or for one device only, distribute/restore credentials across several devices (with collaboration of the user), and to request an update concerning the stored credentials on a device of the user.

In an alternative embodiment of the invention, protocols are foreseen that can be executed from a web portal instead of the memory box application. These protocols support the de-registration of an initialized memory box application, the change of the SID of the user, the change of the OBID of the user, and the request of a new list of one-time user authentication codes. Preferably, the user is required to provide a one-time authentication code when executing protocols from a web portal.

In a preferred embodiment of the invention, reconstruction of server-side credentials occurs collectively by said server and said user of said application.

In a preferred embodiment of the invention, reconstruction of application-side credentials occurs collectively by said memory box application and said relying third party application.

In a more preferred embodiment of the invention, said user is additionally required to provide a KUC code.

In a preferred embodiment of the invention, an instance of said application is instantiated with one or more service-specific identities, which are controlled by the Service Owner and allows to store vault content.

In a preferred embodiment of the invention, said service-specific identities are implemented with a service-specific Public Key Infrastructure (PKI).

In a preferred embodiment of the invention, said instance of application can be used to securely store vault content.

In a preferred embodiment of the invention, the memory box application takes the form of a software library or libraries.

In a particularly preferred embodiment, the used software libraries comprise libraries suitable for obfuscation purposes.

In a particularly preferred embodiment, the used software libraries are embedded in a Software Development Kit (SDK) which offers an interface similar to that of a hardware Secure Element.

In a particularly preferred embodiment, said software libraries comprise libraries suitable for symmetric-key cryptography purposes.

In a particularly preferred embodiment, said software libraries comprise libraries suitable for asymmetric-key cryptography purposes.

In a preferred embodiment of the invention, said software library is available in different operating systems.

In a preferred embodiment of the invention, said software library makes use of a Secure Element as said memory box.

In a preferred embodiment of the invention, the server makes use of a Security Module that stores cryptographic keys and handles all cryptographic operations.

In a preferred embodiment of the invention, said Security Module is either implemented in hardware or software.

In a preferred embodiment of the invention, data sent from the memory box application to the server is classified as meta data or confidential data, whereby meta data needs to be known to said server whereas confidential data only needs to known to said Security Module of said server.

In a preferred embodiment of the invention, said confidential data is additionally encrypted specifically for said Security Module of said server using asymmetric-key cryptography.

In a preferred embodiment of the invention, security breaches (hacking) into said memory box is prevented against eavesdropping, replay attacks, man-in-the-middle attacks, denial-of-service attacks, dictionary attacks or brute force attacks, memory-reading malware and memory-writing malware.

In a more preferred embodiment, a dictionary attack or brute force attack in order to retrieve said KUC is prevented by programming a one-way function using a particularly time and optionally memory consuming algorithm such as a KDF.

In a more preferred embodiment, an offline dictionary attack or brute force attack in order to retrieve said KUC is prevented by making the KDF exponentially slow depending on the number of times a KUC has been entered within a certain time sliding window.

In a more preferred embodiment, an online dictionary attack or brute force attack in order to retrieve said KUC is prevented by the server by locking a device on which the memory box application is installed from the moment said server detects an incorrect KUC provided by the user for a certain amount of consecutive times.

In a more preferred embodiment, malware which tries to read in said memory box is prevented by encrypting all credentials under K0 or K1, and requiring knowledge of user ID, device ID, hardware fingerprint, some randomness, optionally KUC and the obfuscated algorithm of the one-way function (KDF).

In a more preferred embodiment, malware which tries to write in the memory box is prevented by not storing said K0 or K1 except in the server.

In a preferred embodiment, i.e. for certain kinds of use cases, the protected content is not a mere credential but vault content, i.e. information that represents value, comprising cinema tickets, meal vouchers and other coupons, e.g. in the form of a certificate, and for such information the memory box application can operate as a secure vault that only releases valuable information to other recognized memory box applications, after they have identified themselves. This ensures that said vault content cannot be copied freely.

In a preferred embodiment, a service specific vault can be initiated by the memory box application for each service for which vault content needs to be stored, whereby:
- Each Service Owner (SO) gets a master asymmetric key pair, with which it identifies itself, generates vault content, and identifies service-specific memory box application instances.
- The server generates a unique asymmetric key pair with a certificate (issued by the SO with his master key pair) for each memory box application instance and for each service, and remotely loads it into the registered memory box application instance. With this key pair and certificate, each memory box application instance can identify itself towards other memory box application instances activated for the same service, such that vault content can be transferred.
- Vault content is composed of metadata telling what the content is worth (e.g., "7 EUR worth of meal vouchers"), and a unique signature by the SO on the metadata and some randomness that gives the metadata actual value. The metadata can be accessed freely since it is stored in the plain, e.g. for performance reasons (e.g. listing all available meal vouchers), while the signature (on the metadata) needs to be accessed via the memory box application and hence can only be revealed (transferred) to other recognized memory box service-specific vaults, even for the same service. Transferring content to other memory box vaults can happen offline.
- Vault content can also be spent at points of service (POS). This can be done online (i.e., the POS has a connection to the service owner's backend and/or the memory box application's backend), or offline (i.e. without online connection except for periodic forwarding of offline stored data for clearing).

In a preferred embodiment of the invention, said vault content is transferred from one service-specific vault into another identified service-specific vault, without interaction of said server, e.g. the offline transfer of a meal voucher from one device to another device.

In a preferred embodiment of the invention, different types of said vault content co-exist within the memory box application, but are isolated from each other.

In a preferred embodiment of the invention, the retrieval of said vault content from the memory box via the memory box application requires interaction of the user, i.e., the user needs to provide his KUC.

In a preferred embodiment of the invention, said vault content is immediately deleted by the memory box application once issued, transferred or spent and cannot be restored (i.e., said server deletes the content once issued) and is securely stored in at most one of said service-specific vaults in order to prevent copying.

In a preferred embodiment of the invention, said vault content can be spent at a Point Of Service (POS), wherein said device is offline and said POS is either offline or online.

In a preferred embodiment of the invention, said service-specific vault either prevents or supports double-spending of said vault content, if deemed necessary.

In a preferred embodiment of the invention, said computer-implemented method for securely storing said credentials for offline and/or online use and said copy-protected vault content, said storage and said services, are implemented in the Secure Element of a device.

In a preferred embodiment of the invention, said computer-implemented method for securely storing said credentials for offline and/or online use and said copy-protected vault content, said storage and said services, are implemented in the Secure Element of a smartcard.

In a second aspect, the invention provides a system suitable for a computer-implemented method for securely storing credentials for offline and/or online use and copy-protected vault content, which comprises a processing unit configured for the execution of the method as described above.

In a third aspect, the invention provides an application product suitable for a computer-implemented method for securely storing credentials for offline and/or online use and copy-protected vault content, which comprises at least one computer-accessible medium, on which computer-accessible program code portions are saved, which comprise instructions for the execution of the computer-implemented method as described above.

As described in this document, a software application implementing the method disclosed in this document acts as a secure container with some additional functionality. In a preferred embodiment, said application however does not provide the interface to represent and manage its content (e.g. meal vouchers). In a further aspect of the present invention, a second additional application may provide the interfaces with a first application in order to support e.g. meal vouchers, whereby the first application implements the method disclosed in this document yet relies on said second application to provide the user with e.g. a Graphical User Interface (GUI), representing e.g. meal vouchers in an adequate way and providing a communication channel to a point of service (POS) or between different users.

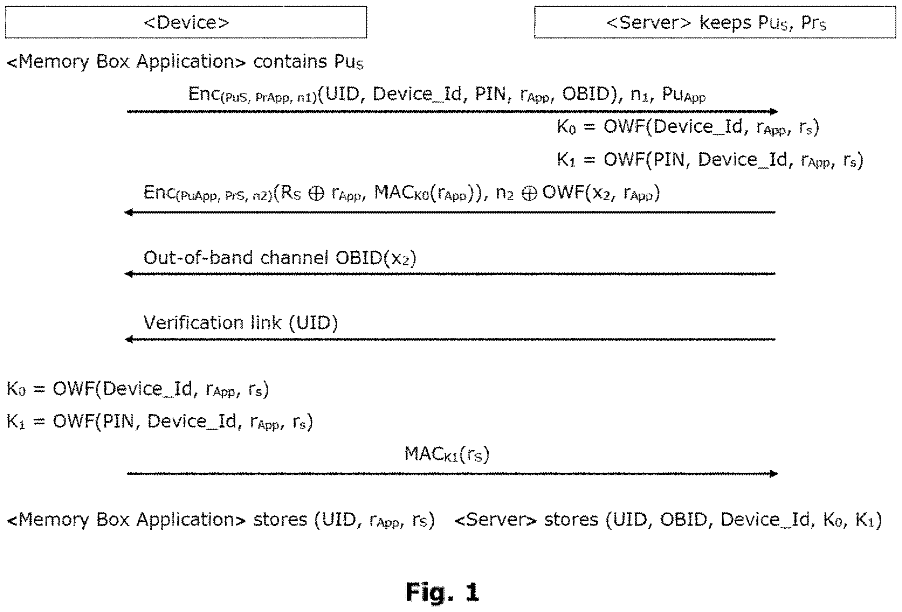

A first embodiment of the present invention comprises the steps (1) memory box initialization, (2) application credential initialization and (3) application credential usage, as further described below:
1. Memory box initialization (see **Fig. 1**)
   1.1. Application in App Store
      A non-initialized memory box application contains the public key Pu_S. Obfuscation is used to store this public key within the application software and bind it to the application, such that a hacker cannot easily replace it to build a rogue application.
      The server contains both this public key Pu_S and its corresponding private key Pr_S.
   1.2. Installation of the application in the device
      During personalization of the memory box application, a temporary key pair (public key Pu_App, private key Pr_App), a random r_App and a nonce n1 are generated. The user is asked to enter his profile including a valid unique identifier UID (e.g. email address) and optionally a valid out-of-bound identifier OBID (e.g. mobile phone number). The user is asked to select a PIN which is used as the KUC. The UID, Device_ID , PIN, r_App and optionally OBID are sent to the server, encrypted under public key Pu_S, authenticated with the private key Pr_App and salted with nonce n1. Nonce n1 and public key Pu_App are sent to the server in the clear.
   1.3. Decryption at server side
      The server decrypts the information received from the memory box application.
   1.4. Generation of the dynamic keys
      The server generates a nonce n2 and a random r_S.
      The server generates keys K0 and K1:
      - K0 is generated using a OWF whereby Device_ID , r_App and r_S are used
      - K1 is generated using a OWF whereby PIN, Device_ID, r_App and r_S are used

      Protections are implemented to avoid dictionary and brute force attacks, e.g. by implementing OWF as a time consuming algorithm.
   1.5. Sending of r_S by the server
      The server prepares a data string containing r_S XOR'ed (i.e. encrypted by applying a bitwise XOR operator) with r_App and a MAC calculated on r_App using K1. The server sends this data containing r_S encrypted under Pu_App, authenticated with the private key Pr_S, salted with nonce n2.
   1.6. Sending of nonce n2 by the server
      The server can send nonce n2 in the clear to the memory box application. However, in case there is an out-of-bound channel (e.g. SMS), the server can send the nonce n2 cryptographically modified with a different nonce x2, that is sent via this out-of-bound channel (e.g. SMS). Sending the nonce x2 over a different channel increases security, although this can still be intercepted by the network or a rogue application. However, it has the advantage that it also brings additional identification trust because the user has entered a correct OBID (e.g. mobile phone number).
   1.7. Verification of UID
      The server executes a process to verify that the UID is authentic and belongs to the user. In a preferred embodiment, the UID is an email address and this process takes the form of a verification link sent via email to the user's email address.
   1.8. Derivation of dynamic keys by the memory box application
      The memory box application derives r_S from the information received from the server. The memory box application derives the dynamic keys:
      - K0 is derived using the OWF whereby Device_ID, r_App and r_S are used
      - K1 is derived using the OWF whereby PIN, Device_ID, r_App and r_S are used

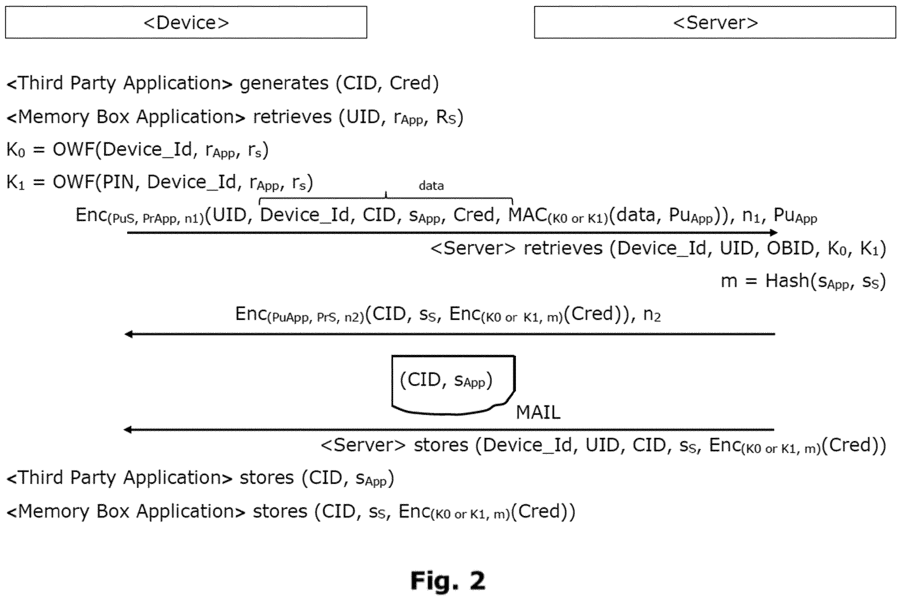

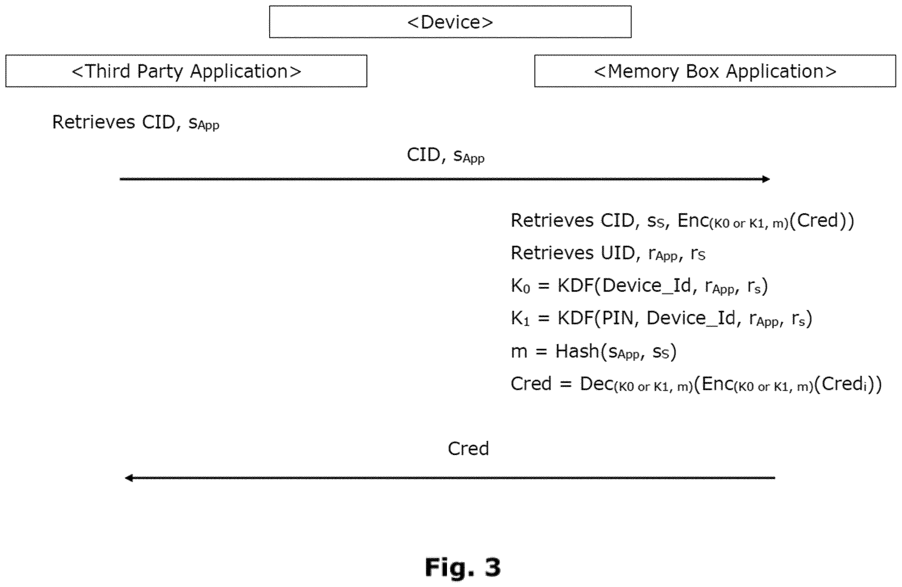

      Obfuscation is used in the implementation of the OWF in the memory box application.
   1.9. Confirmation
      The memory box application generates a MAC on r_S using K1 and sends it the server as proof of having correctly derived the keys.
   1.10. Storage and deletion by the memory box application
      The memory box application stores UID, r_S and r_App. The memory box application deletes PIN, Pu_App, Pr_App and nonces.
   1.11. Storage by server
      After having checked the verification link and the MAC, the server stores UID, OBID, Device_ID, K0 and K1. The Server deletes r_S, r_App and nonces.
2. Application Credential Initialization (see **Fig. 2**)
   2.1. Introduction
      The memory box application can be used by any third party application that wants to store credentials (passwords, keys, etc.) in a mobile application for both offline and online applications. In most cases, these credentials will be initialized at installation time, but this is of course not a must.
      To store credentials in the memory box, they need to be available at the server side. The type of credential and the way that these credentials are generated or chosen is outside the scope of the memory box concept. Following are a few non-limiting possibilities:
      - An asymmetric key pair generated by the third party application
      - A password entered in the device
      - A random symmetric key generated by the third party application Such a given credential Cred is identified by a unique identifier CID.
   2.2. Storage
      To store the credentials in the memory box the following applies:
      - The memory box application generates a temporary key pair (public key Pu_App, private key Pr_App), a random s_App and a nonce n1.
      - The App derives K0 or K1 from r_S and r_App, which were stored during Memory Box Initialisation for the given UID (see step 1 and Fig. 1). In case of K1, the user needs to enter a PIN.
      - UID, Device_ID, CID, s_App and Cred are sent to the server, encrypted under public key Pu_S, authenticated with the private key Pr_App, salted with nonce n1. Nonce n1 and public key Pu_App are sent to the server in the clear. The encrypted data also includes a message authentication code using K1.
      - The server decrypts the data and generates a random s_S.
      - The server retrieves the stored K0 or K1 using Device_ID and UID.
      - The server generates a nonce n2 and a random s_S.
      - Credential Cred is encrypted using K0 or K1 salted with a value m derived from s_App and s_S.
      - The encrypted Cred together with its identifier CID and s_S are encrypted under public key Pu_App, authenticated with the private key Pr_S, salted with nonce n2 and sent to the memory box application. Nonce n2 is sent in the clear to the memory box application.
      - The identifier CID and s_App is sent to the Storage Server, e.g in the form of an email to the email address corresponding with UID. The data CID and s_App can later on be retrieved from the Storage Server to ensure a full restore or a re-initialization.
      - The memory box application decrypts the data and stores the encrypted credential, together with the CID and s_S in the memory box.
      - The third box application stores CID and s_App in the application memory
      - The Server stores Device_ID, UID, CID, s_S and the encrypted Credential under either K0 or K1, salted with m.
      - Optionally, the server can push the encrypted credential to all devices registered under the same UID (email address), using the corresponding K0 or K1.
3. Application credential usage (see **Fig. 3**)
   3.1. Introduction
      The memory box is a concept to store the credentials in a more secured way in the mobile application. How these credentials are used is outside the scope of this invention. It is up to the application developer to decide if these credentials are used on-line and/or offline and if these are used with or without the PIN. This section on application credential usage is therefore only concentrating on how the credential can be retrieved in the clear.
   3.2. Retrieval
      To retrieve credentials stored in the memory box the following applies:
      - If the credential requires a PIN entry to be used in the device, the user is asked to enter the PIN. The PIN cannot be verified in the device, but entering a wrong PIN will result in a wrong credential being retrieved. It is up to the application to see how this is fed back to the user.
      - The third party application retrieves s_App using the credential identifier CID
      - The memory box application retrieves stored s_S using CID and the corresponding stored Credential, encrypted under either K0 or K1, salted with m.
      - The memory box application retrieves the stored r_App and r_S using UID
      - The memory box application derives K0 or K1 using Device_ID, r_App and r_S. In case of K1, the user must have entered the PIN.
      - The memory box application derives m from s_App and s_S
      - The memory box application decrypts the stored Credential using K0 or K1 and salt m.
      - The Credential Cred is returned in the clear to the third party application.

      The application developer needs to be aware that certain precautions need to be taken into account when defining the credential. If, for example, the credential has a structure, it will be easier to do a brute force attack.
   3.3. PIN Retrial
      There is no PIN retrial counter implemented, but the key derivation function is programmed to avoid brute force attacks. E.g., each time a PIN is presented within the same session, it will work twice as slow; in this case, if a normal PIN entry takes 1 sec, the 10^{th} PIN entry will take more than 10 minutes.

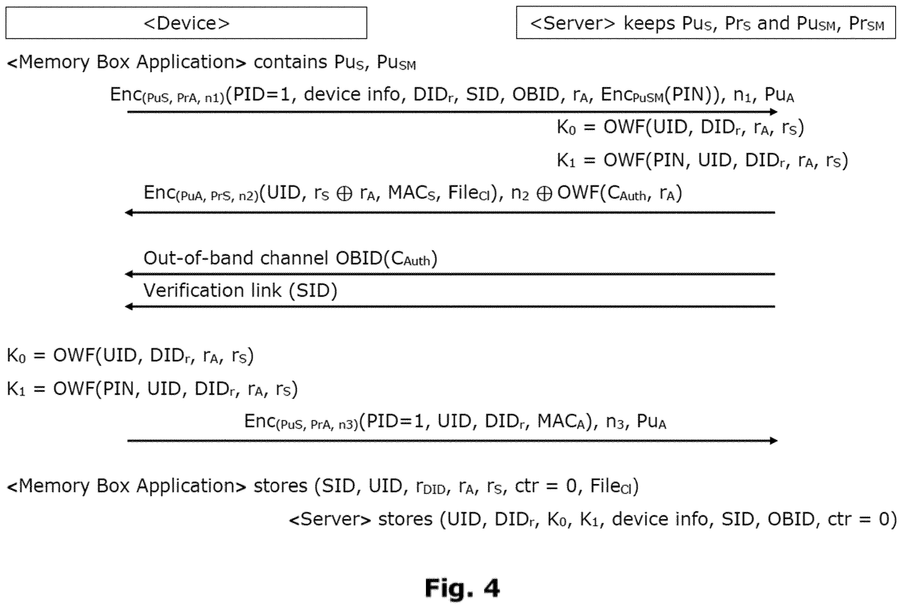

A second embodiment according to the present invention comprises steps (1) memory box initialization, (2) application credential initialization and (3) application credential usage, as further described below:
1. Memory box initialization (see **Fig. 4**)
   1.1. Application in App Store
      A non-initialized memory box application contains the public key of the server, denoted by Pu_S, and the public key of the Security Module of the server, denoted by Pu_SM. Obfuscation is used to store these public keys within the application software and bind it to the application, such that a hacker cannot easily replace them to build a rogue application.
      The server contains both the public key Pu_S and its corresponding private key Pr_S. The Security Module of the server contains both the public key Pu_SM and its corresponding private key Pr_SM.
   1.2. Installation of the application in the device
      During personalization of the memory box application, a temporary key pair (public key Pu_A, private key Pr_A), a random r_A and r_DID, and a nonce n1 are generated. The random r_DID is used by the memory box application to randomize the device ID (DID), resulting in the randomized device ID denoted by DIDr. The user is asked to enter his profile including a valid storage identifier SID (e.g. email address) and optionally a valid out-of-bound identifier OBID (e.g. mobile phone number). The user is asked to select a PIN which is used as the KUC, and optionally additionally a passphrase which is used as a more secure KUC. The memory box application extracts readable device information from the device. The protocol ID (PID) equal to 1, device information, randomized device_ID (DIDr), SID, OBID, r_A, PIN (encrypted under public key Pu_SM), and optionally passphrase (encrypted under public key Pu_SM) are sent to the server, encrypted under public key Pu_S, authenticated with the private key Pr_A and salted with nonce n1. Nonce n1 and public key Pu_A are sent to the server in the clear.
      In the following, it is assumed that only a PIN, and hence not a PIN and passphrase, is sent to the server.
   1.3. Decryption at server side
      The server decrypts the information received from the memory box application and validates the received information (e.g., it checks if the PID is equal to 1).
   1.4. Validation of user and device at server side
      The server validates the device identified by DIDr and checks if the user identified by the pair (SID, OBID) is allowed to initialize a memory box application.
   1.5. Generation of the user ID (UID)
      In case of an existing user, the server obtains the associated UID. In case of a new user, the server either generates a random UID or generates the UID using o OWF whereby the user's SID (e.g., email address) and the user's OBID (e.g., mobile phone number) is used.
   1.6. Generation of the dynamic keys
      The server generates a random r_S and generates keys K0 and K1:
      - K0 is generated using a OWF whereby UID, DIDr , r_A and r_S are used
      - K1 is generated using a OWF whereby PIN, UID, DIDr, r_A and r_S are used

      Protections are implemented to avoid dictionary and brute force attacks, e.g. by implementing OWF as a time and optionally memory consuming algorithm (e.g., a KDF).
      In order to proof to the memory box application that the server was able to derive keys K0 and K1 correctly, it generates a MAC on r_A using both K0 and K1. This MAC is referred to as MAC_S.
   1.7. Generation of the asymmetric client key pair and client certificate The server generates an asymmetric client key pair and the corresponding client certificate for the given user and device, and bundles the key pair and certificate into a containing file, denoted by File_Cl. The server also assigns to the serial number of the certificate the value generated using a OWF whereby UID and DIDr is used.
   1.8. Sending of UID, r_S, MAC_S and File_Cl by the server
      The server generates a nonce n2 and prepares a data string containing UID, r_S XOR'ed (i.e. encrypted by applying a bitwise XOR operator) with r_A, MAC_S and File_Cl. The server sends this data string to the memory box application, encrypted under Pu_A, authenticated with the private key Pr_S, salted with nonce n2.
   1.9. Sending of nonce n2 by the server
      The server can send nonce n2 in the clear to the memory box application. However, in case there is an out-of-bound channel (e.g. SMS), the server can send the nonce n2 cryptographically modified with a random authentication code C_Auth, that is sent via this out-of-bound channel (e.g. SMS). Sending C_Auth over a different channel increases security, although this can still be intercepted by the network or a rogue application. However, it has the advantage that it also brings additional identification trust because the user has entered a correct OBID (e.g. mobile phone number).
   1.10. Verification of SID
      The server executes a process to verify that the SID is authentic and belongs to the user. In a preferred embodiment, the SID is an email address and this process takes the form of a verification link sent via email to the user's email address.
   1.11. Decryption at application side
      The memory box application decrypts the information received from the server and validates the received information.
   1.12. Generation of the dynamic keys by the memory box application
      The memory box application derives UID and r_S from the information received from the server. The memory box application generates the keys K0 and K1:
      - K0 is generated using a OWF whereby UID, DIDr, r_A and r_S are used
      - K1 is generated using a OWF whereby PIN, UID, DIDr, r_A and r_S are used

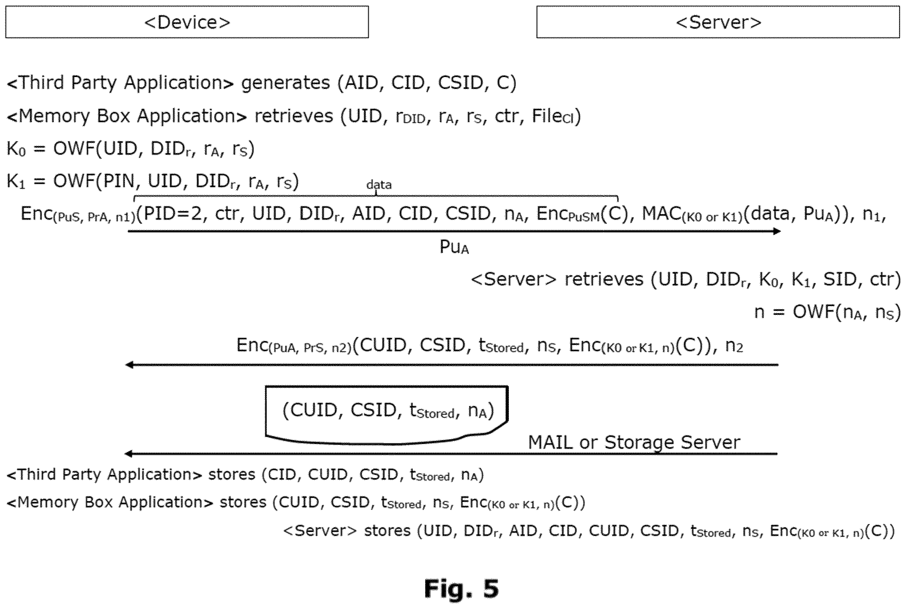

      Obfuscation is used in the implementation of the OWF in the memory box application.
      In order to proof to the server that the memory box application was able to derive keys K0 and K1 correctly, it generates a MAC on r_S using both K0 and K1. This MAC is referred to as MAC_A.
   1.13. Sending of MAC_A by the memory box application
      The memory box application generates a nonce n3. The PID equal to 1, UID, DIDr and MAC_A are sent to the server, encrypted under Pu_S, authenticated with the private key Pr_A, salted with nonce n3. Nonce n3 and public key Pu_A are sent to the server in the clear.
   1.14. Verification of OBID
      The server decrypts the information received from the memory box application and validates the received information. The verification of MAC_A not only ensures the server of the correct derivation of keys K0 and K1 by the application, but also verifies the user's OBID.
   1.15. Storage and deletion by the memory box application
      The memory box application stores SID, UID, r_DID, r_A and r_S, and initializes a counter at 0. Next, the memory box application installs the File_Cl containing the client certificate. The memory box application deletes OBID, PIN, DIDr, K0, K1, Pu_A, Pr_A and nonces.
   1.16. Storage and deletion by the server
      After having checked the verification link and the MAC_A, the server stores UID, DIDr, K0, K1, device information, SID, OBID, and initializes a counter at 0. The server stores the keys K0 and K1 using its Security Module. The Server deletes r_A, r_S and nonces.
   1.17. Generation of one-tome codes by the server
      The server generates a one-time device de-registration code OTDDC and a set of one-time authentication codes OTACs and sends these one-time codes to the Storage Server associated with the user. The server stores these one-time codes as a salted hash.
2. Application Credential Initialization (see **Fig. 5**)
   2.1. Introduction
      The memory box application can be used by any third party application that wants to store credentials (passwords, keys, etc.) in an application, e.g. a mobile application, for both offline and/or online applications. In most cases, these credentials will be initialized at installation time, but this is of course not a must.
      To store credentials in the memory box, they need to be available at the server side. The type of credential and the way that these credentials are generated or chosen is outside the scope of the memory box concept. Following are a few non-limiting possibilities:
      - An asymmetric key pair generated by the third party application
      - An authentication token generated by a third party server
      - A password entered in the device
      - A symmetric key generated by the third party application

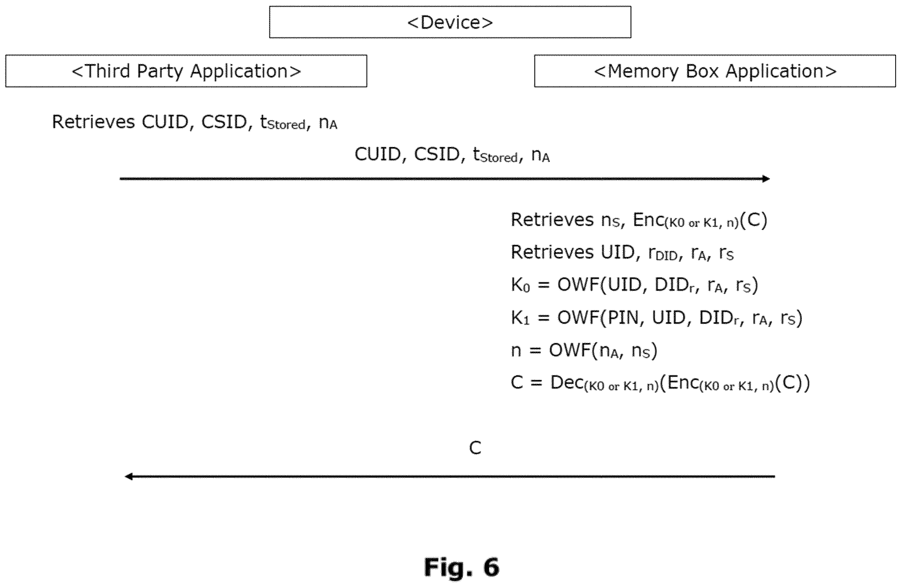

      Such a given credential C is identified by the combination of the application identifier (AID) and the credential identifier (CID). The pair (AID, CID) uniquely identifying the credential is generated by the third party application.
      Further, the third party application generates a credential storage identifier (CSID) for the given credential C that includes how the credential needs to be stored (i.e., protected by the user's KUC or not), and whether the credential is specific for each device (e.g., an authentication token) or is the same across all devices of the same user (e.g., a user's password).
   2.2. Storage
      To store the credentials in the memory box the following applies:
      a. The memory box application generates a temporary key pair (public key Pu_A, private key Pr_A), a random n_A and a nonce n1.
      b. The memory box application generates the randomized device ID DIDr from the device ID DID (extracted from the device) and the random r_DID (stored by the memory box application).
      c. Depending on the requested protection identified by CSID, the memory box application derives K0 (not protected by the user's KUC) or K1 (protected by the user's KUC) from UID, DIDr, r_A and r_S, which were stored during Memory Box Initialisation for the given UID (see step 1 and Fig. 4). In case of K1, the user needs to enter a PIN.
      d. The memory box application increases its stored counter value by one and retrieves the updated value.
      e. The memory box application prepares a data string containing PID equal to 2, counter, UID, DIDr, AID, CID, CSID, n_A, and C, where C is encrypted under the public key Pu_SM. The memory box application sends this data string to the server, encrypted under public key Pu_S, authenticated with the private key Pr_A, and salted with nonce n1. Nonce n1 and public key Pu_A are sent to the server in the clear. The encrypted data also includes a message authentication code (MAC) using either K0 or K1, depending on which key was derived during step c). The memory box application uses its client certificate to perform client authentication.
      f. The server decrypts the information received from the memory box application and validates the received information (e.g., it checks if the PID is equal to 2, it checks if the counter is higher than the value it has stored, ...). The server updates its counter value.
      g. The server generates the credential universal ID (CUID) using a OWF whereby UID, AID, CID, and optionally DIDr if it concerns a device-specific credential are used.
      h. The server generates a random n_S and assigns the current time to the timestamp t_Stored, which indicates the time when the credential was stored (and is used as a version tracker of the credential).
      i. The server retrieves the stored K0 or K1 using the pair (UID, DIDr), depending on the requested protection identified by CSID.
      j. The server encrypts the credential C using K0 or K1 obtained during step i) salted with a value n derived from n_A and n_S using a OWF.
      k. The server generates a nonce n2 and prepares a data string containing CUID, CSID, t_Stored, n_S and the encrypted credential encC. The server sends this data string to the memory box application, encrypted under public key Pu_A, authenticated with the private key Pr_S, salted with nonce n2. Nonce n2 is sent in the clear to the memory box application.
      l. The backup data string containing CUID, CSID, t_Stored and n_A is sent to the Storage Server, e.g. in the form of an email to the email address corresponding with SID. The backup data string can later on be retrieved from the Storage Server to ensure a full restore or a re-initialization.
      m. The memory box application decrypts the information received from the server and validates the received information. The memory box application stores CUID, CSID, t_Stored, n_S and the encrypted credential encC in the memory box.
      n. The third party application stores CID, CUID, CSID, t_Stored and n_A in the third party application memory.
      o. The Server stores UID, DIDr, AID, CID, CUID, CSID, t_Stored, n_S and the encrypted credential encC.
      p. Optionally, in case of a credential that is the same across all devices of the same user, the server can push the encrypted credential to all devices registered under the same UID, using the corresponding K0 or K1 associated with each device.
3. Application credential usage (see **Fig. 6**)
   3.1. Introduction
      The memory box is a concept to store the credentials in a more secured way in the application, e.g. a mobile application. How these credentials are used is outside the scope of this invention. It is up to the application developer to decide if these credentials are used on-line and/or offline and if these are used with or without the user's KUC (i.e., PIN). This section on application credential usage is therefore only concentrating on how the credential can be offline retrieved in the clear.
   3.2. Retrieval
      To retrieve credentials, identified by the 3-tuple (CUID, CSID, t_Stored), stored in the memory box the following applies:
      a. The third party application retrieves CUID, CSID, t_Stored and n_A using the credential identifier CID, and sends this data to the memory box application.
      b. The memory box application retrieves n_S and the corresponding stored encrypted credential encC using CUID, CSID and t_Stored.
      c. The memory box application generates the randomized device ID DIDr from the device ID DID (extracted from the device) and the random r_DID (stored by the memory box application).
      d. Depending on the requested protection identified by CSID, the memory box application derives K0 or K1 from UID, DIDr, r_A and r_S, which were stored during Memory Box Initialisation for the given UID (see step 1 and Fig. 4).
      e. In case of K1, i.e., if encC is protected by the PIN of the user, the user is asked to enter his PIN. The PIN cannot be verified in the device, but entering a wrong PIN will result in a wrong credential being retrieved. It is up to the third party application to see how this is fed back to the user.
      f. The memory box application decrypts the stored credential encC using K0 or K1 obtained during step d) salted with a value n derived from n_A and n_S using a OWF.
      g. The decrypted credential C is returned in the clear to the third party application.

      The application developer needs to be aware that certain precautions need to be taken into account when defining the credential. If, for example, the credential has a structure, it will be easier to do a brute force attack. Therefore, the credential should be as unstructured and as random looking as possible. Preferably, the credential is randomized in advance by the third party application before storage.
   3.3. PIN Retrial
      At the memory box application, there is no PIN retrial counter implemented, but the key derivation function (KDF) is programmed to avoid brute force attacks. E.g., depending on the number of times that a PIN is presented within a certain time sliding window, it will work exponentially slow; in this case, if one PIN entry takes 1 sec, the i^{th} PIN entry within the time sliding window will take 2⁽ⁱ⁻¹⁾ sec.

It is supposed that the present invention is not restricted to any form of realization described previously and that some modifications can be added to the presented example of fabrication without reappraisal of the appended claims.

The invention is further described by the following non-limiting examples which further illustrate the invention, and are not intended to, nor should they be interpreted to, limit the scope of the invention.

### EXAMPLES

### Example 1: offline password

A very simple use case for the memory box is the secure storage of an offline password. The procedure is straightforward: the credential takes the form of a password and is encrypted under K0. The application can always check the password offline by comparing the entered value with the decrypted value returned by the memory box application. If applicable, the server can distribute the credentials to other devices registered by the user.

### Example 2: online transaction security using a symmetric key protected with a PIN

A second use case is to provide online transaction security. A symmetric key is generated in a third party application. This key is stored under K1 by the memory box application. Each time an online transaction has to be authenticated, the user enters the PIN, and the key can be retrieved. This key is then used for securing the transaction (e.g. for generating a MAC). If the PIN is entered incorrectly, the key is retrieved incorrectly and the MAC will be incorrect.

### Example 3: peer-to-peer transaction security using asymmetric key pair

Another use case is securing peer-to-peer (P2P) transactions between two devices. During initialization of such peer-to-peer application, an asymmetric key pair Pu, Pr is generated. Pu is stored under K0, while Pr is stored under K1. A certificate on Pu is generated by the server and also stored under K0. Two devices can then use asymmetric key cryptography techniques to secure peer-to-peer transactions between two devices. The usage of the secret keys requires a correct entry of the PIN by the corresponding user.

### Example 4: distribution and usage of vouchers

A typical use case of the invention as a whole includes the distribution and transfer of vouchers, such as meal voucher, gift vouchers and coupons, through the following steps:
- A device which keeps the vouchers starts with generating and storing an asymmetric key pair in the memory box (see Example 3)
- Meal vouchers take the form of a certificate generated by the server with an overall public key
- The third party application can use the memory box application to store the meal vouchers in the vault, in such a way that they can be consulted but not easily copied by the user who owns the device on which said application runs
- Meal vouchers can be transferred from one of said applications to another in an offline mode and in a secure way, whereby the memory box application assures that copying is made impossible
- Meal vouchers can then be spent in a secure way, e.g. in the POS of a merchant's shop or restaurant, both online or offline

## Claims

1. Computer-implemented method for securely storing credentials (Cred) for offline use and copy-protected vault content, using a server and an application on a device of a user, comprising the steps of:
a) said server storing said credentials in encrypted form, unable to decrypt said credentials by itself;
b) said application storing encrypted credentials on said device, unable to decrypt said encrypted credentials without assistance of a relying third-party application and/or said user;
c) distributing said encrypted credentials across different devices of said same user, using both said server and interaction of said user;
d) said user providing backup data without credentials to said server, for restoring said credentials in case of loss of said device;
whereby the method does not require a Secure Element but is secured using cryptographic keys and encrypted storage,
whereby said copy-protected vault content is transferred from said first device of said first user to a second device of said first user and/or said copy-protected vault content is transferred from said first device of said first user to a third device of a second user, and said copy-protected vault content is transferred without connecting to said server.

2. Method according to claim 1, whereby the reconstruction of server-side credentials occurs collectively by said server and said user of said application.

3. Method according to claims 1-2, whereby the reconstruction of application-side credentials occurs collectively by said application and said relying third-party application.

4. Method according to claims 1-3, whereby said user is additionally required to provide a Key Unlocking Code, whereby said Key Unlocking Code protects said credentials and said copy-protected vault content and whereby said server and said application do not store said Key Unlocking Code of said user.

5. Method according to claims 1-4, whereby an instance of said application is instantiated with one or more service-specific identities, which are controlled by a Service Owner and allows to store vault content.

6. Method according to claims 1-5, whereby said service-specific identities are implemented with a service-specific Public Key Infrastructure, PKI.

7. Method according to claims 1-6, whereby said vault content is transferred from one service-specific vault into another identified service-specific vault, without interaction of said server, i.e. offline.

8. Method according to claims 1-7, whereby different types of said vault content co-exist within the same instance of said application, but are isolated from each other.

9. Method according to claims 1-8, whereby said vault content is immediately deleted once issued, transferred or spent and cannot be restored (i.e., said server deletes the content once issued) and is securely stored in at most one of said service-specific vaults in order to prevent copying.

10. Method according to claims 1-9, whereby said vault content can be spent at a Point Of Service, POS, wherein said device is offline and said POS is either offline or online.

11. Method according to claims 1-10, whereby said service-specific vault supports or prevents double-spending of said vault content.

12. Method according to claims 1-11, whereby said methods, storage and services are implemented in the Secure Element of a device and/or the Secure Element of a smartcard.

13. System suitable for a computer-implemented method according to claims 1-12, which comprises a processing unit configured for the execution of said computer-implemented method.

14. Application product suitable for a computer-implemented method according to claims 1-13, which comprises at least one computer-accessible medium, on which computer-accessible program code portions are saved, which comprise instructions for the execution of said computer-implemented method.

## Patentansprüche

1. Computerimplementiertes Verfahren zum sicheren Speichern von Berechtigungsnachweisen (Cred) für eine Offline-Verwendung und kopiergeschütztem Vault-Inhalt, das einen Server und eine Anwendung auf einem Gerät eines Anwenders verwendet, folgende Schritte umfassend:
a) Speichern der Berechtigungsnachweise in verschlüsselter Form durch den Server, der selbst nicht in der Lage ist, die Berechtigungsnachweise zu entschlüsseln,
b) Speichern verschlüsselter Berechtigungsnachweise auf dem Gerät durch die Anwendung, die selbst nicht in der Lage ist, die Berechtigungsnachweise ohne Hilfe einer vertrauenswürdigen Drittanbieter-Anwendung und/oder des Anwenders zu entschlüsseln,
c) Verteilen der verschlüsselten Berechtigungsnachweise über verschiedene Geräte desselben Anwenders mit Hilfe sowohl des Servers als auch der Interaktion des Anwenders,
d) Bereitstellen von Sicherungsdaten ohne Berechtigungsnachweise für den Server durch den Anwender, um die Berechtigungsnachweise im Fall eines Verlusts des Geräts wiederherzustellen,
wobei das Verfahren kein Secure Element erfordert, sondern mit Hilfe kryptografischer Schlüssel und verschlüsselten Speichers gesichert wird,
wobei der kopiergeschützte Vault-Inhalt von dem ersten Gerät des ersten Anwenders zu einem zweiten Gerät des ersten Anwenders übertragen wird und/oder der kopiergeschützte Vault-Inhalt von dem ersten Gerät des ersten Anwenders zu einem dritten Gerät eines zweiten Anwenders übertragen wird und der kopiergeschützte Vault-Inhalt ohne Verbindung mit dem Server übertragen wird.

2. Verfahren nach Anspruch 1, wobei die Rekonstruktion server-seitiger Berechtigungsnachweise gemeinsam durch den Server und den Anwender der Anwendung geschieht.

3. Verfahren nach den Ansprüchen 1 bis 2, wobei die Rekonstruktion server-seitiger Berechtigungsnachweise gemeinsam durch die Anwendung und die vertrauenswürdige Drittanbieter-Anwendung geschieht.

4. Verfahren nach den Ansprüchen 1 bis 3, wobei zusätzlich erforderlich ist, dass der Anwender einen Schlüsselentsperrungscode bereitstellt, wobei der Schlüsselentsperrungscode die Berechtigungsnachweise und den kopiergeschützten Vault-Inhalt schützt und wobei der Server und die Anwendung den Schlüsselentsperrungscode des Anwenders nicht speichern.

5. Verfahren nach den Ansprüchen 1 bis 4, wobei eine Instanz der Anwendung mit einer oder mehreren dienstspezifischen Identitäten instanziiert wird, die durch einen Dienstinhaber gesteuert werden und es gestatten, Vault-Inhalt zu speichern.

6. Verfahren nach den Ansprüchen 1 bis 5, wobei die dienstspezifischen Identitäten mit einer dienstspezifischen Public Key Infrastructure (PKI) implementiert werden.

7. Verfahren nach den Ansprüchen 1 bis 6, wobei der Vault-Inhalt von einem dienstspezifischen Vault ohne Interaktion des Servers, d. h. offline, in einen anderen identifizierten dienstspezifischen Vault übertragen wird.

8. Verfahren nach den Ansprüchen 1 bis 7, wobei verschiedene Arten des Vault-Inhalts innerhalb derselben Instanz der Anwendung gleichzeitig bestehen, aber voneinander isoliert sind.

9. Verfahren nach den Ansprüchen 1 bis 8, wobei der Vault-Inhalt nach dem Ausgeben sofort gelöscht, übertragen oder verbraucht wird und nicht wiederhergestellt werden kann (d. h. der Server löscht den Inhalt nach dem Ausgeben) und in höchstens einem der dienstspezifischen Vaults sicher gespeichert wird, um ein Kopieren zu verhindern.

10. Verfahren nach den Ansprüchen 1 bis 9, wobei der Vault-Inhalt an einem Point Of Service (POS) verbraucht werden kann, wobei das Gerät offline ist und der POS entweder offline oder online ist.

11. Verfahren nach den Ansprüchen 1 bis 10, wobei der dienstspezifische Vault ein doppeltes Verbrauchen des Vault-Inhalts unterstützt oder verhindert.

12. Verfahren nach den Ansprüchen 1 bis 11, wobei die Verfahren, Speicher und Dienste in dem Secure Element eines Geräts und/oder dem Secure Element einer Smartcard implementiert sind.

13. System, geeignet für ein computerimplementiertes Verfahren nach den Ansprüchen 1 bis 12, das eine Verarbeitungseinheit umfasst, die für das Ausführen des computerimplementierten Verfahrens konfiguriert ist.

14. Anwendungsprodukt, geeignet für ein computerimplementiertes Verfahren nach den Ansprüchen 1 bis 13, das mindestens ein für einen Computer zugängliches Medium umfasst, auf dem für einen Computer zugängliche Programmcodeabschnitte gespeichert sind, die Befehle zum Ausführen des computerimplementierten Verfahrens umfassen.

## Revendications

1. Procédé mis en oeuvre par ordinateur pour stocker de manière sécurisée des informations d'identification (Cred) pour une utilisation hors ligne et un contenu de coffre-fort protégé contre la copie, en utilisant un serveur et une application sur un dispositif d'un utilisateur, comprenant les étapes suivantes :
a) ledit serveur stocke lesdites informations d'identification sous une forme chiffrée, incapable de déchiffrer lesdites informations d'identification par lui-même ;
b) ladite application stocke des informations d'identification chiffrées sur ledit dispositif, incapable de déchiffrer lesdites informations d'identification chiffrées sans l'assistance d'une application tierce de confiance et/ou dudit utilisateur ;
c) distribuer lesdites informations d'identification chiffrées sur différents dispositifs dudit même utilisateur, en utilisant à la fois ledit serveur et l'interaction dudit utilisateur ;
d) ledit utilisateur fournit des données de sauvegarde sans informations d'identification audit serveur, pour restaurer lesdites informations d'identification en cas de perte dudit dispositif ;
moyennant quoi le procédé ne nécessite pas de Secure Element, mais est sécurisé à l'aide de clés cryptographiques et d'un stockage chiffré,
moyennant quoi ledit contenu de coffre-fort protégé contre la copie est transféré dudit premier dispositif dudit premier utilisateur vers un second dispositif dudit premier utilisateur et/ou ledit contenu de coffre-fort protégé contre la copie est transféré dudit premier dispositif dudit premier utilisateur vers un troisième dispositif d'un deuxième utilisateur, et ledit contenu de coffre-fort protégé contre la copie est transféré sans connexion audit serveur.

2. Procédé selon la revendication 1, dans lequel la reconstruction d'informations d'identification côté serveur est effectuée collectivement par ledit serveur et ledit utilisateur de ladite application.

3. Procédé selon les revendications 1 et 2, dans lequel la reconstruction d'informations d'identification côté application est effectuée collectivement par ladite application et par ladite application tierce de confiance.

4. Procédé selon les revendications 1 à 3, dans lequel ledit utilisateur est en outre tenu de fournir un code de déverrouillage de clé, moyennant quoi ledit code de déverrouillage de clé protège lesdites informations d'identification et ledit contenu de coffre-fort protégé contre la copie, et dans lequel ledit serveur et ladite application ne stockent pas ledit code de déverrouillage de clé dudit utilisateur.

5. Procédé selon les revendications 1 à 4, dans lequel une instance de ladite application est instanciée avec une ou plusieurs identités spécifiques à un service, qui sont contrôlées par un propriétaire de service, et permet de stocker un contenu de coffre-fort.

6. Procédé selon les revendications 1 à 5, dans lequel lesdites identités spécifiques à un service sont mises en oeuvre avec une infrastructure à clé publique, PKI, spécifique à un service.

7. Procédé selon les revendications 1 à 6, dans lequel ledit contenu de coffre-fort est transféré d'un coffre-fort spécifique à un service vers un autre coffre-fort spécifique à un service identifié, sans interaction dudit serveur, c'est-à-dire hors connexion.

8. Procédé selon les revendications 1 à 7, dans lequel différents types dudit contenu de coffre-fort coexistent dans la même instance de ladite application, mais sont isolés les uns des autres.

9. Procédé selon les revendications 1 à 8, dans lequel ledit contenu de coffre-fort est immédiatement supprimé une fois publié, transféré ou dépensé et ne peut pas être restauré (c'est-à-dire que ledit serveur supprime le contenu une fois publié) et est stocké de manière sécurisée dans au plus un desdits coffres-forts spécifiques à un service afin d'empêcher la copie.

10. Procédé selon les revendications 1 à 9, dans lequel ledit contenu de coffre peut être dépensé à un point de service, POS, dans lequel ledit dispositif est hors ligne et ledit POS est soit hors ligne, soit en ligne.

11. Procédé selon les revendications 1 à 10, dans lequel ledit coffre-fort spécifique à un service prend en charge ou empêche une double dépense dudit contenu de coffre-fort.

12. Procédé selon les revendications 1 à 11, dans lequel lesdits procédés, stockage et services sont mis en oeuvre dans le Secure Element d'un dispositif et/ou le Secure Element d'une carte à puce.

13. Système approprié pour un procédé mis en oeuvre par ordinateur selon les revendications 1 à 12, qui comprend une unité de traitement configurée pour l'exécution dudit procédé mis en oeuvre par ordinateur.

14. Produit d'application approprié pour un procédé mis en oeuvre par ordinateur selon les revendications 1 à 13, qui comprend au moins un support accessible par ordinateur, sur lequel des parties de code de programme accessibles par ordinateur sont enregistrées, qui comprennent des instructions pour l'exécution dudit procédé mis en oeuvre par ordinateur.
